# FASCICULE DE BREVET EUROPEEN

(11) **EP 2 534 943 B1**
(45) Date de publication et mention de la délivrance du brevet: **01.01.2014**
(21) Numéro de dépôt: 12305671.5
(22) Date de dépôt: 13.06.2012
(51) Int. Cl.: A01K 1/00, A01K 1/02

(54) **Enclos pour niche**
Auslaufgehege für Viehhütte
Enclosure for animal shelter

(30) Priorité: 14.06.2011 FR 1155173
(43) Date de publication de la demande: 19.12.2012
(73) Titulaire: La Buvette, 08090 Tournes (FR)
(72) Inventeur: Bousquet, Jean-Philippe, F-51480 Belval-sous-Chatillon (FR)
(74) Mandataire: Rhein, Alain

(56) Documents cités:
- EP-A2- 1 138 196
- DE-U1-202005 005 236

## Description

La présente invention concerne le domaine des niches à veaux.

Elle concerne plus particulièrement un enclos disposé à la sortie d'une niche à veaux, où un veau peut librement circuler entre la niche elle-même et l'enclos.

Dans le cadre de l'élevage de veaux, ceux-ci sont dès leur naissance placés individuellement dans une niche, pour les isoler du troupeau pendant les premiers jours, pendant lesquels les veaux sont particulièrement vulnérables à diverses maladies contagieuses transmissibles par contact avec d'autres veaux. Pour le bien-être du veau, il est recommandé de lui laisser la possibilité de sortir de sa niche pour avoir la possibilité de voir d'autres bovins par exemple. Pour lui donner cette possibilité tout en conservant son isolement, on dispose devant la porte de la niche un enclos, permettant au veau de librement circuler dans l'espace ainsi formé par l'enclos et la niche.

Le document US5218925 divulgue une telle niche à veaux avec un enclos. Dans la solution présentée dans ce document, l'enclos peut glisser le long de la niche, de sorte qu'il peut entourer la niche, notamment pour le transport de celle-ci, puis une fois en place, l'enclos peut être sorti en le glissant le long de la niche, et le veau peut alors librement circuler entre la niche et l'enclos.

Néanmoins l'enclos de ce document n'a pas de porte, et il faut le basculer pour permettre à un veau d'y entrer depuis l'extérieur, ou d'en sortir. Il en est de même quand il faut y pénétrer pour nettoyer, ou pour prodiguer des soins au veau.

Des solutions ont été proposées avec une porte disposée sur l'enclos. Cela résout la difficulté mentionnée, et permet l'accès à l'enclos depuis l'extérieur. Mais l'ajout d'une porte « ouvre » l'enclos, qui n'est alors plus tenu comme un ensemble. En effet les deux côtés de la porte peuvent s'éloigner l'un de l'autre, ce qui ouvre l'enclos.

Le document EP 1138196 divulgue une solution d'enclos constitué d'une clôture et d'une porte dont l'embrasure présente une hauteur plus faible que la clôture, pour laisser la place près du sol à une barre de solidarisation entre les deux extrémités de clôture de part et d'autre de la porte. Cette solution permet de solidariser l'enclos pour en faire un ensemble cohérent, permettant notamment de le basculer sur la niche pour le transport. Néanmoins cette solution présente l'inconvénient de la présence de la barre en bas de porte, ce qui introduit un risque de trébuchage soit du veau, soit d'une personne, d'autant plus important que cette barre se situe souvent de l'ordre de 10 à 20 cm au-dessus du sol. De plus un tel enclos conçu en forme rectangulaire se déforme facilement en un parallélogramme, rendant ainsi difficile sa manipulation, à moins d'un renforcement assez lourd de l'attache des éléments de clôture.

La présente invention se propose de remédier à au moins une partie des inconvénients précités et propose un enclos avec une porte, une solidarisation et rigidification des clôtures de l'enclos, tout en évitant l'obstacle constitué par la barre en bas de porte.

A cet effet, l'invention concerne un enclos pour niche, en particulier pour niche à veaux comprenant deux parois latérales et une paroi frontale, destinée en position d'enclos à constituer la paroi la plus éloignée de la niche, ladite paroi frontale comportant un portillon. Ledit enclos est particulier en ce qu'il comporte un moyen de solidarisation attaché par un point de fixation à chacune des parois latérales, de sorte à maintenir constante la distance entre lesdits points de fixation ledit moyen étant disposé distant de la paroi frontale vers l'intérieur de l'enclos de sorte à ne pas gêner un veau ou une personne lors du passage dudit portillon. Ainsi la distance est également maintenue entre les deux panneaux frontaux, de sorte que le portillon ferme efficacement l'ouverture laissée entre les deux panneaux frontaux, alors que le passage du portillon est complètement dégagé pour l'entrée ou la sortie d'un veau ou d'une personne. Par « distant » il faut ici comprendre que le moyen de solidarisation est disposé suffisamment éloigné de la paroi frontale de l'enclos et vers l'intérieur de l'enclos pour ne pas être susceptible de gêner un veau ou une personne lors du passage du portillon. Typiquement ledit moyen de solidarisation sera situé à au moins un pas de veau de la paroi frontale, donc à au moins 30 cm, ou à au moins 50 cm, voire à au moins 80 cm.

Selon d'autres caractéristiques :
- ledit moyen de solidarisation peut être disposé au ras du sol de sorte à ne pas gêner les déplacements d'un veau à l'intérieur d'un enclos ; par « au ras du sol », il faut ici comprendre suffisamment près du sol pour que le veau, ou la personne, ne reste pas accroché avec ses pieds en se déplaçant dans l'enclos ; le moyen peut être plat et appuyé au sol, ou alors moins plat, par exemple arrondi, et/ou distant du sol de seulement quelques centimètres par exemple de l'ordre de 5 cm, mais suffisamment peu pour ne pas gêner significativement les déplacements dans l'enclos,
- ledit moyen de solidarisation peut être une barre sensiblement rectiligne disposée perpendiculairement auxdites parois latérales, et configurée pour maintenir la perpendicularité des parois latérales par rapport à ladite barre, de sorte à maintenir la forme globale de l'enclos ; cette disposition permet d'éviter de devoir alourdir et renforcer la fixation desdites parois latérales en leur extrémité proche de la niche,
- ladite barre peut comprendre au moins une plaque d'extrémité fixée en deux points distants à une paroi latérale, de sorte à maintenir l'angle entre ladite barre et ladite paroi latérale ; cette disposition représente une manière constructive simple et efficace pour obtenir le maintien de la perpendicularité entre les parois latérales et la barre,
- ledit moyen de solidarisation peut être conçu démontable ; en effet se trouvant près du sol, il est plus que le reste de l'enclos sujet à salissure et corrosion ; il est donc très utile de pouvoir le remplacer sans avoir à remplacer l'enclos complet,
- ledit enclos peut être conçu basculant de sorte à pouvoir le basculer sur ladite niche en vue de travaux sur la surface de l'enclos, ledit moyen de solidarisation étant conçu pour, en position basculée, constituer un obstacle devant la porte de la niche, de sorte à rendre difficile, de préférence empêcher, la sortie d'un animal, en particulier d'un veau, de ladite niche ; on évite ainsi de devoir monter une porte sur l'ouverture de la niche,
- la paroi frontale peut comprendre deux panneaux frontaux et un portillon, lesdits deux panneaux frontaux étant identiques, facilitant ainsi la fabrication industrielle de l'enclos,
- l'enclos peut comprendre deux panneaux arrière, destinés à fermer l'espace entre la niche et les parois latérales, les deux panneaux arrière étant identiques aux deux panneaux frontaux, de sorte que les deux panneaux frontaux et les deux panneaux arrière forment quatre panneaux identiques, facilitant ainsi d'avantage la fabrication industrielle de l'enclos, et la rendant économique par l'effet de série.

L'avantage découlant de la présente invention consiste en ce que le passage du portillon est complètement libéré, alors que par ailleurs l'enclos est parfaitement maintenu dans la forme souhaitée grâce à la barre et ses plaques d'extrémité. De plus la manipulation de basculement est nettement simplifiée par le fait qu'il n'y a plus besoin de démonter le portillon et de la monter devant l'ouverture de la niche, la barre permettant d'empêcher l'animal de quitter la niche. Enfin la barre permet de faciliter l'opération de basculement en offrant une prise complémentaire, rendant ainsi l'opération plus confortable.

D'autres caractéristiques et avantages de l'invention ressortiront de la description détaillée qui va suivre se rapportant à un exemple de réalisation donné à titre indicatif et non limitatif.

La compréhension de cette description sera facilitée en se référant au dessin joint :

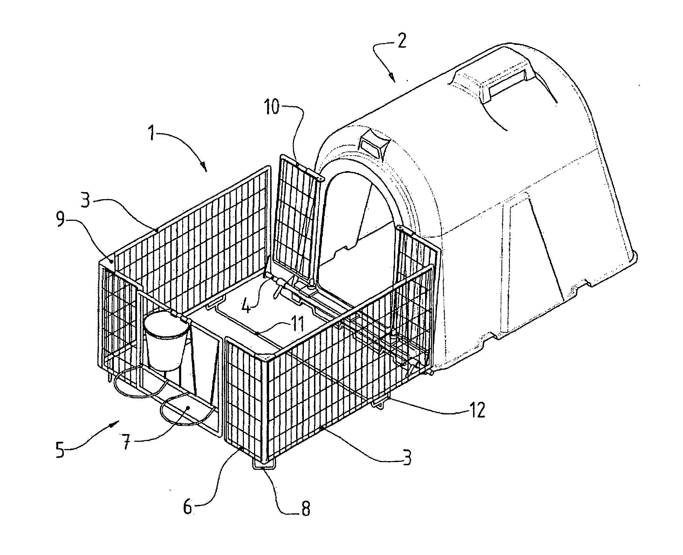

- la figure 1 représente une vue en perspective d'un enclos selon l'invention.

Telle que représentée dans la figure 1 ci-jointe, la présente invention concerne un enclos 1 destiné à être associé à une niche 2.

L'enclos 1 comprend deux parois latérales 3, fixées mobiles en rotation sur un axe horizontal 4. Une paroi frontale 5 comprend deux panneaux frontaux 6 et un portillon 7. Deux pieds 8 permettent d'éloigner les parois latérales 3 et frontale 5 du sol, pour limiter leur salissure et en conséquence leur corrosion. Deux équerres 9 permettent de rigidifier l'angle droit entre les parois latérales 3 et les panneaux frontaux 6. Deux panneaux arrière 10 ferment l'espace compris entre l'extrémité arrière des parois latérales 3 et la niche 2. Ces panneaux arrière 10 peuvent d'une part être conçus identiques l'une à l'autre, et d'autre part ils peuvent être conçus identiques aux panneaux frontaux 6 de sorte à faciliter la fabrication industrielle de tels enclos 1, en réduisant le nombre de pièces différentes à concevoir, fabriquer, stocker et gérer. Il suffit pour cela de prévoir aussi sur les panneaux arrière 10 les dispositions prévues sur les panneaux frontaux 6 pour permettre la fixation des pieds 8, équerres 9 et accessoires de portillon 7.

Une barre 11 est fixée aux deux parois latérales 3 par l'intermédiaire de plaques d'extrémité 12. Ces plaques d'extrémité 12 sont fixées aux parois latérales 3 en deux points distants, et sont angulairement solidaires de la barre 11. D'une part la barre 11 maintient les deux parois latérales 3 à égale distance l'une de l'autre, ce qui suffit pour maintenir l'écartement entre les deux panneaux frontaux 6 et permet donc de maintenir l'embrasure du portillon 7 à une largeur correspondant au portillon 7 lui-même. Ainsi le portillon 7 peut jouer son rôle, sans risque que le veau passe entre le portillon 7 en position fermée et le panneau frontal : la barre 11 empêche qu'un espace puisse s'ouvrir entre le portillon 7 et le panneau frontal. D'autre part la barre 11, grâce aux plaques d'extrémité 12 maintient l'angle entre ladite barre 11 et les parois latérales 3. Les barres d'extrémité 12 ne sont pas indispensables, mais elles permettent une meilleure répartition des contraintes, et donc une meilleure tenue dans le temps. Dans l'exemple représenté où l'enclos 1 présente une forme sensiblement rectangulaire, la barre 11 maintient donc la forme rectangulaire, et empêche que l'enclos 1 puisse prendre une forme de parallélogramme, ce qui serait particulièrement gênant au moment où l'on veut basculer l'enclos 1 sur la niche 2, soit pour effectuer des travaux au sol, par exemple de nettoyage, à l'endroit de l'enclos 1, soit pour transporter la niche 2 avec son enclos 1. L'enclos et/ou la niche peuvent aussi être pourvus de roulettes (ou d'un autre moyen) pour faciliter le déplacement de l'ensemble niche + enclos.

Il est à noter qu'une seule plaque d'extrémité 12 suffirait à remplir la fonction de rigidification l'autre attache pouvant être conçue libre en rotation. La solution avec les deux plaques permet de réduire la dimension de chacune des plaques, et de n'avoir qu'un seul type de fixation, ce qui simplifie la réalisation de manière industrielle des enclos 1.

La même fonction pourrait aussi être remplie par un renforcement des attaches des parois latérales 3 sur l'axe 4. Mais cela nécessiterait des attaches lourdes et chères, peu compatibles avec la légèreté et la simplicité obtenue grâce à l'invention.

Lorsqu'on veut faire entrer un jeune veau dans un enclos 1 et une niche 2, il suffit d'ouvrir le portillon 7. Il n'y a aucun obstacle à franchir pour entrer dans l'enclos 1, quand le portillon 7 est ouvert l'accès est complètement dégagé. Le veau peut donc entrer sans crainte de trébucher. On peut alors refermer la porte. Le veau peut circuler librement entre l'enclos 1 et la niche 2. La barre 11 est au ras du sol, et le veau ne la perçoit même pas, de sorte qu'elle ne représente aucune gêne pour lui. De plus la position au ras du sol de la barre 11 empêche l'éleveur de trébucher quand il doit entrer dans l'enclos pour une intervention. La barre 11 peut aussi être située à quelques centimètres du sol, par exemple 3 ou 5 cm, et présenter un profil adapté pour éviter l'accrochage, par exemple arrondi.

Lorsqu'on souhaite nettoyer la surface couverte par l'enclos 1, le plus commode est de basculer l'enclos 1 sur la niche 2 pour libérer la place et faciliter le travail sur ladite surface. On fait alors entrer le veau dans la niche 2, puis on bascule l'enclos 1.

On peut prévoir qu'avant le basculement, on démonte le portillon 7, et on le monte entre les panneaux arrière 10, pour fermer la niche 2, et empêcher le veau de sortir de la niche 2 pendant les travaux.

Selon une option préférée de l'invention, on peut aussi laisser le portillon 7 en place, celui-ci accompagne alors le basculement et se retrouve au-dessus de la niche 2. L'ouverture de la niche 2 n'est alors pas fermée par un portillon. Mais la barre 11 est disposée à une distance appropriée de l'axe 4, de sorte qu'en position basculée elle se trouve devant l'ouverture de la niche 2, à une hauteur telle qu'il est difficile, voire impossible, au veau de sortir de la niche 2. Ainsi on peut économiser l'opération de démontage et remontage du portillon 7, d'une part avant de basculer l'enclos 1 sur la niche 2, et une deuxième fois après avoir remis l'enclos 1 en place.

Pour basculer l'enclos 1 sur la niche 2, l'opérateur saisit tout d'abord l'enclos 1 au niveau d'un ou des deux panneaux frontaux 6, et commence à soulever l'avant de l'enclos 1. Ensuite, pour éviter de devoir monter les bras trop haut, il peut saisir la barre 11, qui lui sert de prise complémentaire, et facilite la finalisation du basculement. Pareillement pour redescendre l'enclos 1 de la niche 2, l'opérateur aura intérêt à saisir l'enclos 1 tout d'abord par la barre 11, puis quand une partie du basculement est opérée, à prendre relai sur les panneaux frontaux 6, où un seul des deux, pour accompagner le mouvement jusqu'au sol.

L'avantage de la présente invention réside en particulier en ce que le passage du portillon 7 est complètement libéré, le veau pouvant faire au moins un pas, voire deux pas après le portillon 7, avant de rencontrer le moyen de solidarisation 11. De plus, dans un mode de réalisation préféré, la barre est au ras du sol, et ne gêne donc pas la circulation du veau ou d'une personne à l'intérieur de l'enclos. Par ailleurs l'enclos 1 est parfaitement maintenu dans la forme souhaitée grâce à la barre 11 et ses plaques d'extrémité 12. De plus la manipulation de basculement est nettement simplifiée par le fait qu'il n'y a plus besoin de démonter le portillon 7 et de la monter devant l'ouverture de la niche 2, la barre 11 permettant d'empêcher l'animal de quitter la niche 2. Enfin la barre 11 permet de faciliter l'opération de basculement en offrant une prise complémentaire, rendant ainsi l'opération plus confortable.

Bien que l'invention ait été décrite à propos d'une forme de réalisation particulière, il est bien entendu qu'elle n'y est nullement limitée et qu'on peut y apporter diverses modifications de formes, de matériaux et de combinaisons de ces divers éléments sans pour cela s'éloigner du cadre de l'invention.

## Revendications

1. Enclos (1) pour niche (2), en particulier pour niche (2) à veaux, comprenant deux parois latérales (3) et une paroi frontale (5), destinée en position d'enclos à constituer la paroi la plus éloignée de la niche (2), ladite paroi frontale (5) comportant un portillon (7), **caractérisé en ce qu'**il comporte un moyen de solidarisation (11) attaché par un point de fixation à chacune des parois latérales (3), de sorte à maintenir constante la distance entre lesdits points de fixation, ledit moyen étant disposé distant de la paroi frontale (5) vers l'intérieur de l'enclos (1) de sorte à ne pas gêner un veau ou une personne lors du passage dudit portillon (7).

2. Enclos (1) selon la revendication précédente, dans lequel ledit moyen de solidarisation est disposé au ras du sol, de sorte à éviter toute gêne à la circulation dans l'enclos (1).

3. Enclos (1) selon l'une des revendications précédentes, dans lequel ledit moyen de solidarisation est une barre (11) sensiblement rectiligne disposée perpendiculairement auxdites parois latérales (3), et configurée pour maintenir la perpendicularité des parois latérales (3) par rapport à ladite barre (11), de sorte à maintenir la forme globale de l'enclos (1) .

4. Enclos (1) selon la revendication précédente, dans lequel ladite barre (11) comprend au moins une plaque d'extrémité (12) fixée en deux points distants à une paroi latérale (3), de sorte à maintenir l'angle entre ladite barre (11) et ladite paroi latérale (3).

5. Enclos (1) selon l'une des revendications précédentes, dans lequel ledit moyen de solidarisation est conçu démontable.

6. Enclos (1) selon l'une des revendications précédentes, conçu basculant de sorte à pouvoir le basculer sur ladite niche (2) en vue de travaux sur la surface de l'enclos (1), ledit moyen de solidarisation étant conçu pour, en position basculée, constituer un obstacle devant une ouverture de la niche (2), de sorte à rendre difficile, de préférence empêcher, la sortie d'un animal, en particulier d'un veau, de ladite niche (2).

7. Enclos (1) selon l'une des revendications précédentes, dans lequel la paroi frontale (5) comprend deux panneaux frontaux (6) et un portillon (7), lesdits deux panneaux frontaux (6) étant identiques.

8. Enclos (1) selon la revendication précédente comprenant deux panneaux arrière (10), destinée en position d'enclos à fermer l'espace entre la niche (2) et les parois latérales, les deux panneaux arrière (10) étant identiques aux deux panneaux frontaux (6), de sorte que les deux panneaux frontaux (6) et les deux panneaux arrière (10) forment quatre panneaux identiques.

## Patentansprüche

1. Auslaufgehege (1) für Viehhütte (2), insbesondere für eine Viehhütte (2) für Kälber, umfassend zwei seitliche Wände (3) und eine Vorderwand (5), vorgesehen, um in Auslaufpositionierung die von der Viehhütte (2) entfernteste Wand zu bilden, wobei die besagte Vorderwand (5) ein Einlasstor (7) umfasst, **dadurch gekennzeichnet, dass** es ein Befestigungsmittel (11) umfasst, das durch einen Befestigungspunkt mit jeder der seitlichen Wände (3) verbunden ist, derart, um die Entfernung zwischen den besagten Befestigungspunkten konstant zu halten, wobei das besagte Mittel von der Vorderwand (5) beabstandet in Richtung auf das Innere der Auslaufgehege (1) angeordnet ist, um den Zugang eines Kalbs oder einer Person durch das besagte Einlasstor (7) nicht zu verhindern.

2. Auslaufgehege (1) nach dem vorgehenden Anspruch, bei welchem das besagte Befestigungsmittel bodennah angeordnet ist, um jede Störung beim Betreten des Auslaufgeheges (1) zu vermeiden.

3. Auslaufgehege (1) nach einem der vorgehenden Ansprüche, bei welchem das besagte Befestigungsmittel eine im wesentlichen geradlinig ausgebildete Stange (11) ist, die senkrecht zu den besagten seitlichen Wänden (3) angeordnet ist und ausgestaltet ist, um die Rechtwinkligkeit der seitlichen Wände (3) hinsichtlich der besagten Stange (11) beizubehalten, derart, um die Gesamtform des Auslaufgeheges (1) zu wahren.

4. Auslaufgehege (1) nach dem vorgehenden Anspruch, bei welchem die besagte Stange (11) zumindest eine Abschlussplatte (12) umfasst, die in zwei beabstandeten Punkten an einer seitlichen Wand (3) befestigt ist, derart, um den Winkel zwischen der besagten Stange (11) und der besagten seitlichen Wand (3) beizubehalten.

5. Auslaufgehege (1) nach einem der vorgehenden Ansprüche, bei welchem das besagte Befestigungsmittel zerlegbar vorgesehen ist.

6. Auslaufgehege (1) nach einem der vorgehende Ansprüche, die verschwenkbar vorgesehen ist, um es über die besagte Viehhütte (2) zwecks Arbeiten im Bereich des Auslausgeheges (1) verschwenken zu können, wobei das besagte Befestigungsmittel vorgesehen sei, um in verschwenkter Position ein Hindernis vor einer Öffnung der Viehhütte (2) zu bilden, derart, um den Austritt eines Tieres, insbesondere eines Kalbs aus der besagten Viehhütte (2) zu erschweren, ja vorzugsweise zu verhindern.

7. Auslaufgehege (1) nach einem der vorgehenden Ansprüche, bei welchem die Vorderwand (5) zwei vordere Wandteile (6) und ein Einlasstor (7) umfasst, wobei die besagten beiden vorderen Wandteile (6) identisch seien.

8. Auslaufgehege (1) nach dem vorgehenden Anspruch, umfassend zwei hinteren Wandteile (10), vorgesehen, um in Auslaufpositionierung den Raum zwischen der Viehhütte (2) und den seitlichen Wänden zu schließen, wobei die beiden hinteren Wandteile (10) mit den bedien vorderen Wandteilen (6) identisch seien, sodass die beiden vorderen Wandteile (6) und die beiden hinteren Wandteile (10) vier identische Wandteile bilden.

## Claims

1. Enclosure (1) for animal shelter (2), in particular for a shelter (2) for calves, comprising two side walls (3) and a front wall (5) intended for forming, in position of enclosure, the wall farthest away from the shelter (2), said front wall (5) including a barrier (7), wherein it includes a fastening means (11) fixed by means of a fixing point to each of the side walls (3) so as to maintain constant the distance between said fixing points, said means being arranged at a distance from said front wall (5) towards the interior of the enclosure (1) in order not to hinder a calf or a person from passing through said barrier (7).

2. Enclosure (1) according to the preceding claim, wherein said fastening means is arranged at the level of the ground, in order to avoid any hindrance for the circulation within the enclosure (1).

3. Enclosure (1) according to one of the preceding claims, wherein said fastening means is a substantially rectilinear bar (11) arranged perpendicular to said side walls (3) and configured so as to preserve the perpendicularity of the side walls (3) with respect to said bar (11), so as to preserve the global shape of the enclosures (1).

4. Enclosure (1) according to the preceding claim, wherein said bar (11) comprises at least one end plate (12) fixed at two points distant from each other to a side wall (3), so as to preserve the angle between said bar (11) and said side wall (3).

5. Enclosure (1) according to one of the preceding claims, wherein said fastening means is designed removable.

6. Enclosure (1) according to one of the preceding claims, designed tiltable so as to be able to be tilted against said shelter (2) for carrying out work on the surface of the shelter (1), said fastening means being designed for forming, in tilted position, an obstacle in front of an opening of the shelter (2), so as to make it difficult, preferably hinder, for an animal, in particular a calf, to leave said shelter (2).

7. Enclosure (1) according to one of the preceding claims, wherein the front wall (5) comprises two front panels (6) and a barrier (7), said two front panels (6) being identical.

8. Enclosure (1) according to the preceding claim, comprising two rear panels (10) intended for closing, in position of enclosure, the space between the shelter (2) and the side walls, the two rear panels (10) being identical to the two front panels (6), so that the two front panels (6) and the two rear panels (10) form four identical panels.
